# EUROPEAN PATENT SPECIFICATION

(11) **EP 2 916 639 B1**
(45) Date of publication and mention of the grant of the patent: **23.09.2020**
(21) Application number: 13832347.2
(22) Date of filing: 18.07.2013
(51) Int. Cl.: A01B 1/06, A01B 33/02, F16H 3/085

(54) **COUNTER-ROTATING CULTIVATION DEVICE**
KULTIVIERUNGSVORRICHTUNG MIT GEGENDREHUNG
DISPOSITIF DE CULTURE À CONTRE-ROTATION

(30) Priority: 31.08.2012 SE 1200527
(43) Date of publication of application: 16.09.2015
(73) Proprietor: Mattson, Rolf, 90595 Umea (SE)
(72) Inventor: Mattson, Rolf, 90595 Umea (SE)
(74) Representative: Bjerkéns Patentbyrå KB (Gävle)
(86) International application number: PCT/SE2013/000115
(87) International publication number: WO 2014/035310

(56) References cited:
- EP-A1- 1 329 147
- DE-A1- 3 641 263
- DE-A1- 3 641 263
- DE-A1- 19 621 702
- DE-A1- 19 621 702
- DE-U1- 7 724 835
- FR-A1- 2 689 363
- GB-A- 1 550 768
- JP-A- 2000 295 902
- US-A- 131 401
- US-A- 5 850 882
- US-A1- 2003 132 011
- US-A1- 2005 023 010
- US-A1- 2005 023 010

## Description

### Field of the Invention

The present invention concerns a counter-rotating cultivation device intended for use as, for example, a hand-held cultivator, in accordance with the claims.

### Background of the Invention

In several different areas, there exists a need to mix, blend or break up material. Such a need is present, for example in connection with horticulture (gardening) and other similar work where for example soil and the like are mixed (cultivated) in conjunction with loosening of the soil and the removal of weeds.

Equipment intended to be used to cultivate (mix) soil and the like are already known in several different varieties and sizes. For example, several different types of rotating tillers/cultivators have been developed, everything from relatively large tillers/cultivators, which are powered by internal combustion engines, to relatively small hand-held types of cultivators, which are powered by electric motors.

One problem with known types of hand-held cultivating/tilling devices, whose cultivating tools (implements) during use rotate around an essentially horizontal axle, is that they tend to move in an undesired direction such as for example away from or toward the user of the cultivating device. This means that the user must hold back the cultivating device which may be strenuous for the user. Especially for older, younger or muscularly weak people or persons with some type of physical handicap, existing hand-held tilling/cultivating devices may be difficult to operate.

Known types of hand-held tilling/cultivating devices even have other design flaws. Current designs make it for example difficult to work the soil where space is limited, such as for example around bushes. There is also a problem if the hand-held cultivating device's handles and the like are not adaptable for right and left handed users.

The need to mix materials is also present in several other areas. There also exist problems with mixing materials, and/or stirring materials or fluids in other areas. For example, problems exist when paint, concrete and other types of materials are to be mixed. The fact that current devices usually have mixing tools (implements) that rotate in the same direction, causes motion energy to occur that wants to propel the device in some direction, which most often does not favor either the mixing (blending) operation or the user's working conditions.

### Prior Art

Designs which are intended to be used to stir, mix or loosen materials in gardens and the like are previously known in numerous different variants. For example, GB1467252 describes a variant of an electrically driven cultivator (tilling device). The cultivator is comprised of a motor unit which, via an axle and a gear drives one first cultivating tool (tine implement) and one second tool. The cultivator differs substantially from the design according to the present patent application. For example, the cultivating tools are not counter-rotating which allows the tools during use to pull (push, drag) in some direction.

US5850882 describes a hand-held gardening cultivator. The hand-held gardening cultivator utilizes rechargeable batteries to power itself. The design includes a drive axle which via a gear transfers a rotational force to one first cultivating tool and to one second cultivating tool. The cultivator differs substantially from the design according to the present patent application. For example, the cultivating tools are not counter-rotating relative one another, which results in the cultivating tools pulling the cultivator in a forward direction during use.

US2823597 describes a hand-held cultivator. The hand-held cultivator includes a drive axle which via a gear transfers a rotational force to one first cultivating tool and to one second cultivating tool. The cultivator differs substantially from the design according to the present patent application. For example, the cultivating tools are not counter-rotating which results in the cultivating tools pulling the hand-held cultivator in some direction.

DE1800229 describes a hand-carried cultivator intended to be used for soil cultivation. The hand-carried cultivator is driven by an electric drill or the like. The design differs substantially from the design according to the present patent application. For example, the cultivator's cultivating tools are not counter-rotating relative one another.

US20030066663 describes a hand-held rotating device intended to be used for example for removal of weeds and the like. The design includes a rotary axle which in its upper end is connected to a drill and in its lower end is equipped with cultivating tools. Even this design differs substantially from the design according to the present patent application. For example, the design does not include counter-rotating cultivating tools.

FR 2 689 363 discloses a counter-rotating cultivation device which has cultivating implements attached to a first and a second output axle respectively on opposite sides of a gear. The rotational axes of the first and second output axles coincide. The cultivating implements are formed by arms extending in a direction generally perpendicular to said rotational axes from discs arranged on the respective shafts. Each implement comprises a plurality of discs with arms attached thereto, thereby defining a large width of the cultivation device.

### Brief Description of the Drawings

In the following detailed description of the present invention, reference and references to the following figures will occur. The figures are briefly described in the following figure list.
Fig. 1 shows schematically a counter-rotating cultivation device in accordance with the present patent application.

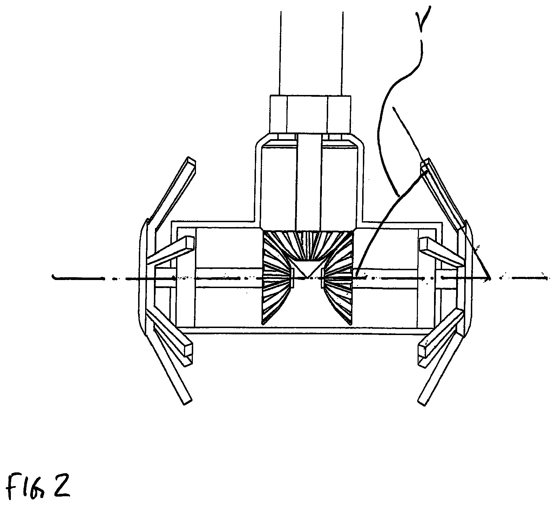

Fig. 2 shows the angle of a cultivation tool.

### Detailed Description of the Invention

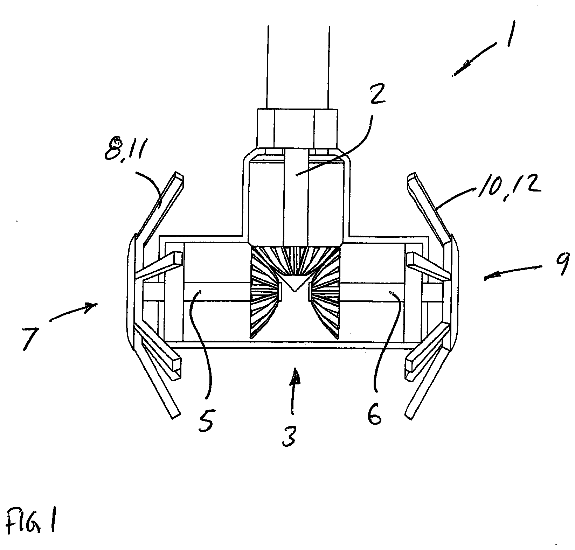

With reference to Fig. 1, a counter-rotating cultivation device **1** is schematically shown, which is intended to transfer rotational force from one drive unit to at least one first and one second cultivation tool or the like, in accordance with the present patent application. The counter-rotating cultivation device may be used in applications where the drive unit and the counter-rotating cultivation device are integrated into one unit. The counter-rotating cultivation device may even be used in applications where the drive unit and the counter-rotating cultivation device are comprised of separate units which may be connected together and disconnected.

In one preferred embodiment of the present counter-rotating cultivation device, the device is intended to be used in a hand-carried (hand-held) cultivating device (not shown in its entirety in the figures). In alternative embodiments the counter-rotating cultivation device 1 may be used in other applications, such as in devices intended for mixing or blending of materials and fluids.

The counter-rotating cultivation device 1 includes at least one input axle (shaft) **2.** The input axle 2 is preferably driven by a drive unit (not shown in the figures). The counter-rotating cultivation device's 1 input axle 2 drives via a gear **3,** completely or partially enclosed in a gearbox **4** or similar, at least one first output axle (shaft) **5** and at least one second output axle (shaft) **6.** The first output axle 5 includes at least one connector **7,** connecting member or similar for at least one cultivation tool **8.** The second output axle 6 includes at least one connector **9,** connecting member or similar for at least one second cultivation tool **10.** The cultivation tool 8 in the exemplifying embodiment is comprised of at least one first cultivating implement **11.** Cultivation tool 8 and cultivation tool 10 may be comprised of other types of tools, devices and the like intended for mixing, blending and/or stirring material and/or fluids.

The gear 3 of the exemplifying embodiment includes an input axle 2, a first output axle 5 and a second output axle 6. The output axles' 5 and 6 rotation axes are preferably directed in the latitudinal direction in relation to the input axle's rotation axis. In the exemplifying embodiment, the first output axle's 5 and the second output axle's 6 rotation axes coincide essentially with each other in a common rotation axis. A unique feature of the present design is that the gear's 3 design allows for the first output axle 5 and the second output axle 6 to rotate in opposite directions in relation to one another.

In one exemplifying embodiment the first output axle's 5 rotation axis and the second output axle's 6 rotation axis essentially coincide with each other in the output axles' 5 and 6 axial directions. In one preferred embodiment of the cultivation device 1, according to the present patent application, a first cultivating implement 11 is connected to the first output axle 5 and a second cultivating implement 12 is connected to the second output axle 6. Cultivating implements 11 and 12 may have a plurality of different shapes. In the exemplifying embodiment, cultivating implements 11 and 12 have a shape which likens (brings to mind) a truncated cone, where the section of the truncated cone with the lesser diameter is connected to the output axle. The angle between each respective implements' rotation axis and the projecting sections (that form the shape of a truncated cone) lie preferably within an interval of 30 to 45 degrees. The shown embodiment is not limiting for the scope of protection, for example the angle V in alternative embodiments may differ from the given interval. Furthermore, the counter-rotating cultivation device's design (form, shape) and the design of the implement's protruding parts (tines or similar) as well as the number of protruding parts may differ from the ones shown in the figures.

It is conceivable that the present counter-rotating cultivation device 1 be defined in another manner. It is for example conceivable that the present invention be defined as cultivation implement (head) for a hand-held tiller/cultivator. The counter-rotating cultivation device may even be used in other areas such as some type of device intended to be used for example to mix paint, concrete as well as several other types of materials and fluids.

In the detailed description of the present invention, design details may have been omitted which are apparent to persons skilled in the art of the field concerning the method and device. For example, the design includes bearings and several more components of a type suitable for the purpose. Such obvious design details are included to the extent necessary so that the proper and full performance of the present invention is achieved.

Even if certain preferred embodiments have been described in detail, variants and modifications of the method and device may become apparent for specialists in the field of the invention. All such modifications and variants are regarded as falling within the scope of the following claims.

### Exemplifying Advantages of the Present Invention

A number of advantages are achieved with the present invention. Firstly, a cultivation device is achieved that has a counter-rotating rotational movement which enables the device to a lesser extent than known designs to pull or push itself in an undesired direction. Another advantage of the design is that muscularly weak people are able to more easily operate the cultivation device during the process of mixing (tilling) materials. A further advantage is that the device provides for very good accessibility in regards to the mixing (tilling) of soil around bushes and the like. A still further advantage of the design is that it may easily be adapted to both left and right handed users. A yet further advantage of the design is that the mixing (tilling) process is more efficient and this also reduces the user's work effort, which in turn may also reduce work-related injuries.

## Claims

1. Counter-rotating cultivation device (1), intended for example to be used in a hand-carried cultivator, including at least one input drive axle (2) which transfers rotational force via at least one gear (3) to at least one first output axle (5) and at least one second output axle (6), wherein the first output axle's (5) rotation axis and the second output axle's (6) rotation axis coincide essentially with each other in the output axles' (5,6) axial directions, and the counter-rotating cultivation device includes at least one first cultivation tool (8) connected to the first output axle (5) and at least one second cultivation tool (10) which is connected to the second output axle (6), and the first cultivation tool (8) is comprised of a first cultivating implement (11) and the second cultivation tool (10) is comprised of a second cultivating implement (12), and wherein the second output axle's (6) direction of rotation is opposite in relation to the first output axle's (5) direction of rotation, said counter-rotating cultivation device being **characterized in that** the cultivating implements (11, 12) have a form that likens a truncated cone, wherein the truncated cone of the respective cultivation implement (11, 12) is connected with its lesser diameter to the associated output axle (5, 6) and wherein the diameter of the truncated cone of the respective cultivating implement (11, 12) increases towards the gear (3), and that the truncated cone of the respective cultivating implement (11, 12) overlaps the gear (3) in the direction of the rotation axes of the first and second output axles (5, 6).

2. Counter-rotating cultivation device (1) in accordance with claim 1, **characterized in that** the gear is, completely or partially, enclosed in a gear box.

## Patentansprüche

1. Kultivierungsvorrichtung mit Gegendrehung (1), vorgesehen für beispielsweise die Nutzung in einem von Hand getragenem Kultivierer, umfassend mindestens eine Antriebsachse (2) welche Drehkraft über mindestens ein Getriebe (3) auf mindestens eine erste Ausgangsachse (5) und auf mindestens eine zweite Ausgangsachse (6) überträgt, wobei die Drehachse der ersten Ausgangsachse (5) und die Drehachse der zweiten Ausgangsachse (6) im Wesentlichen mit der jeweils anderen in den axialen Richtungen der Ausgangsachsen (5, 6) zusammenfallen, und die Kultivierungsvorrichtung mit Gegendrehung mindestens ein erstes Kultivierungswerkzeug (8), das mit der ersten Ausgangsachse (5) verbunden ist, und mindestens ein zweites Kultivierungswerkzeug (10) umfasst, das mit der zweiten Ausgangsachse (6) verbunden ist, und das erste Kultivierungswerkzeug (8) aus einem ersten Kultivierungsgerät (11) besteht und das zweite Kultivierungswerkzeug (10) aus einem zweiten Kultivierungsgerät (12) besteht, und wobei die Drehrichtung der zweiten Ausgangsachse (6) entgegengesetzt zu der Drehrichtung der ersten Ausgangsachse (5) ist, wobei die Kultivierungsvorrichtung mit Gegendrehung **dadurch gekennzeichnet ist, dass** die Kultivierungsgeräte (11, 12) eine Form aufweisen, die einem Kegelstumpf gleicht, wobei der Kegelstumpf des jeweiligen Kultivierungsgeräts (11, 12) mit seinem kleinerem Durchmesser mit der zugehörigen Ausgangsachse (5, 6) verbunden ist und wobei der Durchmesser des Kegelstumpfes des jeweiligen Kultivierungsgeräts (11, 12) in Richtung des Getriebes (3) zunimmt, und dass der Kegelstumpf des jeweiligen Kultivierungsgeräts (11, 12) das Getriebe (3) in der Richtung der Drehachsen der ersten und zweiten Ausgangsachsen (5, 6) überlappt.

2. Kultivierungsvorrichtung mit Gegendrehung (1) nach Anspruch 1, **dadurch gekennzeichnet, dass** das Getriebe, vollständig oder teilweise, in einem Getriebekasten eingeschlossen ist.

## Revendications

1. Dispositif de culture à contre-rotation (1), destiné par exemple à être utilisé dans un cultivateur porté à la main, incluant au moins un essieu d'entraînement d'entrée (2) qui transfère une force de rotation via au moins un engrenage (3) à au moins un premier essieu de sortie (5) et au moins un second essieu de sortie (6), dans lequel l'axe de rotation du premier essieu de sortie (5) et l'axe de rotation du second essieu de sortie (6) coïncident essentiellement l'un avec l'autre dans les directions axiales des essieux de sortie (5, 6), et le dispositif de culture à contre-rotation inclut au moins un premier outil de culture (8) relié au premier essieu de sortie (5) et au moins un second outil de culture (10) qui est relié au second essieu de sortie (6), et le premier outil de culture (8) comprend un premier instrument de culture (11) et le second outil de culture (10) comprend un second instrument de culture (12), et dans lequel la direction de rotation du second essieu de sortie (6) est opposée à la direction de rotation du premier essieu de sortie (5), ledit dispositif de culture à contre-rotation étant **caractérisé en ce que** les instruments de culture (11, 12) présentent une forme qui ressemble à un cône tronqué, dans lequel le cône tronqué de l'instrument de culture (11, 12) respectif est relié par son diamètre moindre à l'essieu de sortie (5, 6) associé et dans lequel le diamètre du cône tronqué de l'instrument de culture (11, 12) respectif augmente vers l'engrenage (3), et que le cône tronqué de l'instrument de culture (11, 12) respectif chevauche l'engrenage (3) dans la direction des axes de rotation des premier et second essieux de sortie (5, 6).

2. Dispositif de culture à contre-rotation (1) selon la revendication 1, **caractérisé en ce que** l'engrenage est, complètement ou partiellement, enfermé dans une boîte d'engrenage.
